# EUROPÄISCHE PATENTSCHRIFT

(11) **EP 0 980 317 B1**
(45) Veröffentlichungstag und Bekanntmachung des Hinweises auf die Patenterteilung: **18.12.2002**
(21) Anmeldenummer: 98925507.0
(22) Anmeldetag: 30.04.1998
(51) Int. Cl.: B60G 7/02, B60G 15/06

(54) **RADAUFHÄNGUNG FÜR KRAFTFAHRZEUGE**
WHEEL SUSPENSION FOR MOTOR VEHICLES
SUSPENSION DE ROUE POUR VEHICULES AUTOMOBILES

(30) Priorität: 09.05.1997 DE 19719627
(43) Veröffentlichungstag der Anmeldung: 23.02.2000
(73) Patentinhaber: DaimlerChrysler AG, 70567 Stuttgart (DE)
(72) Erfinder: GURE, Dietmar, D-71120 Grafenau (DE)
(86) Internationale Anmeldenummer: EP9802556
(87) Internationale Veröffentlichungsnummer: WO98051521

(56) Entgegenhaltungen:
- DE-A- 4 012 418
- US-A- 5 536 035

## Beschreibung

Die Erfindung betrifft eine Radaufhängung für Kraftfahrzeuge gemäß dem Oberbegriff des Anspruches 1.

Bei aus der Praxis bekannten Radaufhängungen sind die Radaufstandskräfte zumindest teilweise gegen eine karosserieseitige Konsole abgestützt, die haubenartig ausgebildet ist und von einem Tragteil der Karosserie, beispielsweise einem seitlichen Längsträger derselben aufragend und zur Fahrzeugaußenseite hin auskragend befestigt ist. An der Konsole sind auch die karosserieseitigen Lager eines oberen Führungslenkers der Radaufhängung befestigt, wobei diese Lager beiderseits eines zumindest einen Teil der Radlast gegen die Konsole abstützenden Elementes liegen, was zu einer hohen Beanspruchung der Konsole führt, nicht zuletzt auch deshalb, weil sowohl die Radlast wie auch die Radführungskräfte großen Schwankungen unterliegen und teilweise stoßartig auftreten. Dies bedingt, daß die Konsole, die als Blechteil ausgeführt ist, starkwandig ausgeführt und im Bereich der Anlenkung des Abstützelementes wie auch der Lagerbefestigungen zusätzlich verstärkt sein muß. Eine solch steife Ausführung der Konsole insbesondere in deren hochbelastetem kopfseitigen Bereich ist auch aus Geräuschgründen erforderlich, da die Konsole einen verhältnismäßig großflächigen kopfseitigen Deckbereich aufweist, der entsprechend schwingungsgefährdet ist. Dementsprechend ergibt sich für die Konsole auch ein verhältnismäßig großes Gewicht.

Bei einer weiteren bekannten Radaufhängung (US 5 169 171 A) mit oberem Führungslenker und die Radlast gegen die Karosserie abstützendem Element sind die karosserieseitigen Aufnahmen für die beiden axial beabstandeten Lager des Führungslenkers und des die Radlast abstützenden Elementes seitlich an einem ein Tragteil der Karosserie bildenden Längsträger angeordnet und für die Lager durch zwei U-förmige, nach unten offene Bügel gebildet, die längs ihrer voneinander abgewandten Schenkel über nach außen abgewinkelte Flansche an der Seitenwand des Tragteiles und längs ihrer Stege über auskragende Flansche an der Oberwand des Tragteiles befestigt sind. Zwischen den einander zugewandten Schenkeln der beiden die Lager aufnehmenden Bügel ist ein weiterer, U-förmiger, nach unten offener Bügel angeordnet, dessen Schenkel mit den benachbarten Schenkeln der U-förmigen Lageraufnahmen verbunden sind und der über diese Aufnahmen mitgetragen wird. Diese Zusammenfassung der U-förmigen Aufnahmen soll zu einer leichteren Bauweise sowie einer besseren Maßhaltigkeit bei der Fertigung führen, im Vergleich zu einer als bekannt vorausgesetzten, aufgelösten Bauweise mit drei gesondert am Tragteil befestigten bügelförmigen Aufnahmen.

Ferner ist aus der US 5 536 035 A eine Radaufhängung der eingangs genannten Art bekannt, bei der der Einsatz einen Adapter bildet, über den - bei unveränderter Konsole - wahlweise eine Federbein-Radaufhängung oder eine Radaufhängung in Doppel-Querlenker-Bauweise eingesetzt und montiert werden kann. In Verbindung mit einer Radaufhängung in Doppel-Querlenker-Bauweise wird der obere Führungslenker in den Schenkeln des Einsatzes gelagert, und es sind die Schenkel der Konsole mit Zugangsöffnungen auf diese Lagerstellen versehen. Neben der Möglichkeit, über den Einsatz als Adapter unterschiedliche Radaufhängungen verwenden zu können, soll über den Einsatz und die für diesen gewählte Materialstärke auch der Grad der Aussteifung der Konsole durch den Einsatz bestimmt werden, so daß je nach aufbauseitiger Ausgestaltung und dadurch bestimmtem Hauptzweck des Fahrzeuges über den Einsatz auch unterschiedlichen Haupteinsatzgebieten und dadurch bedingten Belastungen Rechnung getragen werden kann. Bedingt durch die Befestigung des haubenartigen Einsatzes in seinem Rückenbereich gegenüber dem karosserieseitigen Tragteil ergeben sich für den Einsatz ungünstige Belastungsverhältnisse, und die aus Belastungsgründen anzustrebende, eng angepaßte Ausgestaltung des Einsatzes an die Konsole im beiderseitigen Kopfbereich ist aufwendig.

Der Erfindung liegt die Aufgabe zugrunde, eine Radaufhängung der eingangs genannten Art bezüglich ihrer Konsole dahingehend auszubilden, daß diese leicht und kostengünstig aufgebaut werden kann, und zwar bei Vermeidung der angesprochenen Nachteile.

Dies wird durch die Merkmale des Anspruches 1 ereicht, wobei die Anordnung der Lager des Führungslenkers zwischen den Schenkeln von Konsole und Einsatz in Verbindung mit der fußseitigen Anbindung der Schenkel des Einsatzes am Tragteil zu einer günstigen Kraftaufnahme bei Entlastung der Konsole und zu einer einfachen Lagerbefestigung führt. Zudem bedingt dies eine Enlastung des Kopfbereiches von Konsole und Einsatz, da die Radführungskräfte unmittelbar in die Schenkel eingeleitet werden und auf den die Schenkel verbindenden Kopfbereich nur noch das die Radlast abstützende Element jeweils abgestützt ist.

Weitere Ausgestaltungen und Merkmale der Erfindung sind den Ansprüchen zu entnehmen.

Die Erfindung wird anhand eines Ausführungsbeispieles näher erläutert, wobei
- Figur 1: zur Darstellung der Gesamtsituation schematisiert eine bekannte Radaufhängung in Verbindung mit ihrer karosserieseitigen Anlenkung zeigt, und zwar teilweise geschnitten bei in Fahrzeugquerrichtung liegender Schnittebene,
- Figur 2: im Schema, seitlich außen vom Fahrzeug gesehen, den Aufbau einer erfindungsgemäß ausgestalteten Konsole, und
- Figur 3: eine mögliche konstruktive Ausgestaltung einer Konsole in perspektivischer Explosionsdarstellung.

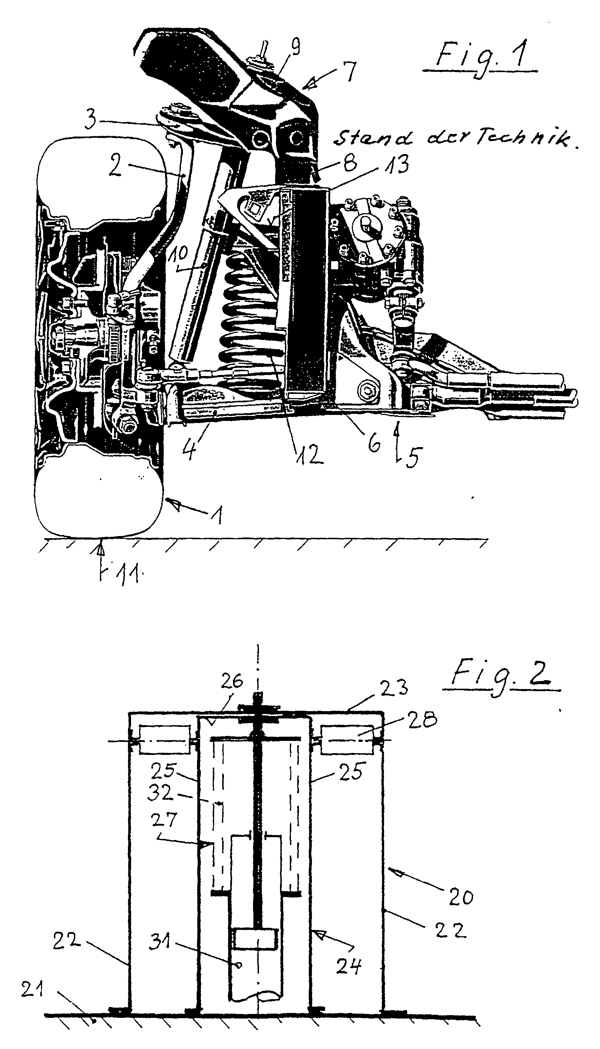

In der der Darstellung der Gesamtsituation dienenden Figur 1 ist mit 1 das Rad bezeichnet, das über einen Radträger 2 als Bestandteil der Radführung mit einem oberen Führungslenker 3 und einem unteren Führungslenker 4 verbunden ist. Die beiden Führungslenker 3 und 4 sind mit der Karosserie 5 des nicht weiter dargestellten Fahrzeuges verbunden. Die Karosserie 5 umfaßt in dem hier dargestellten Bereich ein Tragteil 6 in Form eines seitlichen Längsträgers, an dessen Oberseite eine Konsole 7 angebracht ist. Die Konsole 7 weist ein dem Tragteil 6 zugewandtes Fußteil 8 auf und ist insgesamt haubenartig ausgebildet.

Die Haube ist zur Fahrzeugaußenseite hin offen und weist ein Kopfteil 9 auf, das nach außen kragt und in dessen Kopffläche als radlastabstützendes Element ein Dämpfer 10 abgestützt ist, der mit dem unteren Führungslenker 4 verbunden ist und über den auf das Rad wirkende Vertikalkräfte 11 gegen die Konsole abgestützt werden.

Je nach Ausbildung des radlastabstützenden Elementes als reines Dämpferelement, als Dämpferelement mit Zusatzfederfunktion, zum Beispiel zum Zwecke der Niveauregulierung, oder als kombiniertes Feder-Dämpfer-Element analog zu Federbeinen werden dabei über das hier als Dämpfer dargestellte Element die auf das Rad wirkenden vertikalen Stütz- oder Stoßkräfte 11 zumindest teilweise auf die Konsole 7 übertragen. In der Schemadarstellung gemäß Figur 1, die eine bekannte Lösung zeigt, ist ergänzend zum Dämpfer 10 noch eine Tragfeder 12 vorgesehen, die zwischen unterem Führungslenker 4 und einer karosserieseitigen Abstützung 13 eingespannt ist, wobei die Abstützung 13 unabhängig von der Konsole vorgesehen ist und damit zur Entlastung der Konsole beiträgt.

Der obere Führungslenker übergreift in der Darstellung gemäß Figur 1 den Dämpfer 10 seitlich und weist eine Lagerung gegenüber der Konsole 7 auf, die hier durch die Konsole 7 überdeckt und nicht weiter dargestellt ist.

Die Konsole ist dadurch in ihrem Kopfbereich sowohl durch die über den Dämpfer 10 wie auch durch die über den oberen Führungslenker 3 eingeleiteten Kräfte belastet, was bei der haubenartigen Ausbildung der Konsole 7 mit relativ großer seitlicher Auskragung und auch verhältnismäßig großer, in Fahrzeuglängsrichtung gemessener Breite eine entsprechend starke Auslegung des Kopfteiles 9, und damit bei bekannten Konstruktionen entsprechende Aussteifungen bedingt, die auch der Halterung der Lager des oberen Führungslenkers dienen.

Figur 2 zeigt, bezogen auf eine Grundanordnung gemäß Figur 1, in schematisierter Seitenansicht eine Konsole 20 in erfindungsgemäßer Ausgestaltung, die an einem symbolisch angedeuteten Tragteil 21 der Karosserie befestigt ist und von diesem aufragt. Die insgesamt haubenförmige Konsole 20 weist seitliche Schenkel 22 auf, die über ein Kopfteil 23 als Brücke verbunden sind. Die Konsole 20 ist mit einem Einsatz 24 versehen, der seitliche, im wesentlichen zu den Schenkeln 22 gleichgerichtete Schenkel 25 aufweist und dessen Kopfteil mit 26 bezeichnet ist. Die Schenkel 25 sind fußseitig ebenfalls mit dem Tragteil 21 verbunden. Die Konsole 20 und ihr Einsatz 24 können desweiteren auch, was hier nicht weiter gezeigt ist, im Rückenbereich miteinander verbunden sein, wobei die Konsole 20 im Rückenbereich üblicherweise geschlossen ist.

Der Einsatz 24, der kopfseitig mit dem Kopfteil 23 der Konsole 20 verbunden ist, nimmt als radlastabstützendes Element in der hier gezeigten Schemadarstellung ein kombiniertes Feder-Dämpfer-Element 27 auf, mit Dämpfer 31 und Feder 32.

In den Schenkeln 22 der Konsole 20 und den Schenkeln 25 des Einsatzes 24 sind die hier symbolisch angedeuteten Lager 28 des oberen Führungslenkers gehalten, so daß über die Schenkel 25 des Einsatzes 24 ein Teil der über den oberen Führungslenker eingeleiteten Kräfte unmittelbar auf das Tragteil 21, also die Karosserie übertragen wird. Diese direkte Abstützung der auf die Lager 28 wirkenden Kräfte wie auch der über das Stützelement 27 eingeleiteten Kräfte über den Einsatz 24 auf das Tragteil 21, d.h. auf die Karosserie bedeutet eine wesentliche Entlastung der Konsole 20 insgesamt, und macht es möglich, die Konsole 20 trotz Abstützung der gesamten Vertikalkräfte z.B. über ein Feder-Dämpfer-Element 27 leichter und dennoch sehr stabil auszubilden, wobei der Einsatz 24 durch seine Anbindung gegenüber dem Tragteil 21 gleichzeitig auch verhindert, daß der flächige Kopfteil 23 der Konsole 20 beispielsweise unter dem Einfluß von Radlastschwankungen aufgrund seiner membranartigen Struktur zur Geräuschquelle wird.

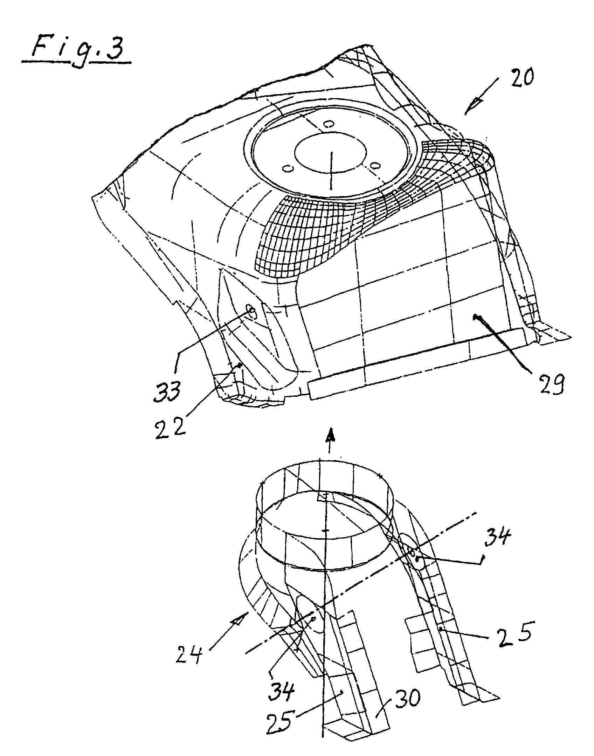

Eine der Figur 2 im wesentlichen entsprechende perspektivische Darstellung einer Konsole 20 mit Einsatz 24 zeigt Figur 3 in Explosionsdarstellung, wobei die Aufnahmen für die Lager 28 in den Schenkeln 22 und 25 mit 33 bzw. 34 bezeichnet sind und die Darstellung des Einsatzes 24 auch erkennen läßt, daß dieser hier rückseitig offen ist und über abgewinkelte Flansche 30 seiner Schenkel 25 unmittelbar am Rückenteil 29 der Konsole 20 befestigt wird.

Die erfindungsgemäße Ausgestaltung gemäß Figuren 2 und 3 führt dazu, daß die Konsole 20 insgesamt leichter und trotzdem schwingungsunempfindlicher gestaltet ist, da über den Einsatz 24 sowohl eine bessere Kraftaufnahme wie auch eine zusätzliche Abstützung der insoweit kritischen Bereiche der Konsole 20 erreicht wird.

## Patentansprüche

1. Radaufhängung für Kraftfahrzeuge mit die Radlast gegen die Karosserie (5) höhenveränderlich abstützendem Element (27), mit einer Radführung, die einen oberen, karosserieseitig über Lager (28) angelenkten Führungslenker (3) umfaßt und mit einer von einem Tragteil (21) der Karosserie (5) aufragenden, haubenartigen, zur Fahrzeuglängsaußenseite auskragenden Konsole (20), die seitliche Schenkel (22) aufweist, fußseitig am Tragteil (21) befestigt ist und kopfseitig eine Abstützung für das radlastabstützende Element (27) bildet, wobei die Konsole (20) einen haubenartigen, zur Fahrzeuglängsaußenseite offenen Einsatz (24) aufnimmt, der kopfseitig mit der Konsole (20) verbunden ist, zu den Schenkeln (22) der Konsole (20) im wesentlichen gleichgerichtete Schenkel (25) aufweist und fußseitig am Tragteil (21) befestigt ist, und wobei zwischen dem radlastabstützenden Element (27) und den Schenkeln (22) der Konsole (20) die Lager (28) des Führungslenkers (3) liegen und gegen die Schenkel (25) des Einsatzes (24) abgestützt sind,
**dadurch gekennzeichnet,**
**daß** die Lager (28) des Führungslenkers (3) zwischen den Schenkeln (22) der Konsole (20) und den Schenkeln (25) des Einsatzes (24) liegen, die fußseitig am Tragteil (21) befestigt sind.

2. Radaufhängung nach Anspruch 1,
**dadurch gekennzeichnet,**
**daß** der Einsatz (24) und die Konsole (20) im Bereich des Haubenrückens verbunden sind.

3. Radaufhängung nach Anspruch 1 oder 2,
**dadurch gekennzeichnet,**
**daß** das radlastabstützende Element (27) eine Tragfeder (32) umfaßt.

4. Radaufhängung nach einem der vorhergehenden Ansprüche,
**dadurch gekennzeichnet,**
**daß** das radlastabstützende Element (27) einen Dämpfer (31) umfaßt.

5. Radaufhängung nach Anspruch 3 und 4,
**dadurch gekennzeichnet,**
**daß** das radlastabstützende Element (27) als kombiniertes Feder-Dämpfer-Element ausgebildet ist.

## Claims

1. Wheel suspension for motor vehicles with an element (27) height-adjustably supporting the wheel load on the bodywork (5), having an upper guide link (3) mounted by bearings (28) in an articulating arrangement on the bodywork-side and a hood-type bracket (20), with side arms (22), projecting to the vehicle longitudinal outer side standing proud of a support part (21) of the bodywork (5), being attached at the bottom end to the support part (21) whilst affording support at the top end for the wheel-load-supporting element (27), the bracket (20) receiving a hood-type insert (24) opening towards the vehicle longitudinal outer side, the top end of which is joined to the bracket (20), having arms (25) extending substantially in the same direction as the arms (22) of the bracket (20) and attached at the bottom end to the support part (21), the bearings (28) of the guide link (3) being disposed between the wheel-load-supporting element (27) and the arms (22) of the bracket (20) and supported on the arms (25) of the insert (24),
**characterised in that**
the bearings (28) of the guide link (3) sit between the arms (22) of the bracket (20) and the arms (25) of the insert (24), which are attached at the bottom end to the support part (21).

2. Wheel suspension as claimed in claim 1,
**characterised in that**
the insert (24) and the bracket (20) are joined in the region of the hood rear.

3. Suspension as claimed in claim 1 or 2,
**characterised in that**
the wheel-load-supporting element (27) is a support spring (32).

4. Wheel suspension as claimed in one of the preceding claims,
**characterised in that**
the wheel-load-supporting element (27) is a damper (31).

5. Wheel suspension as claimed in claim 3 or 4,
**characterised in that**
the wheel-load-supporting element (27) is provided in the form of a combined spring-damper element.

## Revendications

1. Suspension de roue pour véhicules automobiles, comportant un élément (27) portant la charge de roue de façon variable en hauteur contre la carrosserie (5), comportant un guidage de roue qui comprend un bras de guidage supérieur (3) articulé du côté carrosserie via des paliers (28), et comportant une console (20) en forme de capot en surélévation à partir d'une partie porteuse (21) de la carrosserie (5) et en porte-à-faux vers le côté longitudinal extérieur du véhicule, console qui comprend des branches latérales (22), qui est fixée du côté pied sur la partie porteuse (21), et qui forme du côté tête un appui pour l'élément (27) portant la charge de roue, la console (20) recevant un insert (24) en forme de capot ouvert vers le côté extérieur longitudinal du véhicule, qui est relié du côté tête à la console (20), qui comprend des branches (25) orientées sensiblement comme les branches (22) de la console (20), et qui est fixé du côté pied sur la partie porteuse (21), les paliers (28) du bras de guidage (3) se trouvant entre l'élément (27) portant la charge de roue et les branches (22) de la console (20) et étant appuyés contre les branches (25) de l'insert (24), **caractérisée en ce que** les paliers (28) du bras de guidage (3) se trouvent entre les branches (22) de la console (20) et les branches (25) de l'insert (24) qui sont fixées du côté pied sur la partie porteuse (21).

2. Suspension de roue selon la revendication 1, **caractérisée en ce que** l'insert (24) et la console (20) sont reliés dans la zone dorsale du capot.

3. Suspension de roue selon l'une ou l'autre des revendications 1 et 2, **caractérisée en ce que** l'élément (27) portant la charge de roue comprend un ressort porteur (32).

4. Suspension de roue selon l'une des revendications précédentes, **caractérisée en ce que** l'élément (27) portant la charge de roue comprend un amortisseur (31).

5. Suspension de roue selon les revendications 3 et 4, **caractérisée en ce que** l'élément (27) portant la charge de roue est réalisé sous forme d'élément combiné ressort-amortisseur.
